# EUROPÄISCHE PATENTSCHRIFT

(11) **EP 2 946 227 B1**
(45) Veröffentlichungstag und Bekanntmachung des Hinweises auf die Patenterteilung: **23.05.2018**
(21) Anmeldenummer: 14700231.5
(22) Anmeldetag: 07.01.2014
(51) Int. Cl.: G01S 17/89, G01S 7/486, G06F 3/01, G06F 1/32, G06F 3/03, G06K 9/00, H04N 13/20

(54) **SENSORANORDNUNG ZUR ERFASSUNG VON BEDIENGESTEN AN FAHRZEUGEN**
SENSOR ASSEMBLY FOR DETECTING OPERATOR GESTURES IN VEHICLES
ENSEMBLE DE DÉTECTION CONÇU POUR DÉTECTER DES GESTES DE COMMANDE DANS DES VÉHICULES

(30) Priorität: 18.01.2013 DE 102013100521
(43) Veröffentlichungstag der Anmeldung: 25.11.2015
(73) Patentinhaber: Huf Hülsbeck & Fürst GmbH & Co. KG, 42551 Velbert (DE)
(72) Erfinder: SCHINDLER, Mirko, 42549 Velbert (DE); GERDES, Bernd, 45355 Essen (DE); ETTE, Bernd, 38442 Wolfsburg (DE)
(74) Vertreter: Zenz Patentanwälte Partnerschaft mbB
(86) Internationale Anmeldenummer: PCT/EP2014/050106
(87) Internationale Veröffentlichungsnummer: WO 2014/111286

(56) Entgegenhaltungen:
- EP-A2- 2 314 427
- DE-A1- 10 147 807
- DE-A1-102011 089 195
- US-A1- 2006 219 861

## Beschreibung

Die Erfindung betrifft Sensoranordnungen, welche zur optisch gestützten Erkennung von Bedienungsgesten oder Bedienungshandlungen an Kraftfahrzeugen eingesetzt werden.

Insbesondere betrifft die Erfindung Sensoranordnungen, welche zeitlich und räumlich aufgelöste Informationen erfassen und auswerten können, um den Bedienwillen eines Benutzers zu erkennen.

Im Stand der Technik sind optische Verfahren bekannt, die Betätigungen in Reaktion auf eine Auswertung von Bildinformationen erkennen und daraufhin z.B. Schaltvorgänge auslösen. Beispielsweise sind hier automatische Videoauswertungen von Überwachungssystemen zu nennen, welche Muster oder Bewegungen aus einzelnen Bildern oder einer Folge von Bilder herauslesen. Außerdem sind zahlreiche andere optisch gestützte Systeme bekannt, wobei zu den grundlegendsten Lichtschranken oder Helligkeitssensoren gehören. Optische Systeme mit höherer Komplexität bedienen sich jedoch oft eines Arrays von optisch sensitiven Erfassungseinheiten, meist als Pixel bezeichnet, die parallel optische Informationen aufnehmen, beispielsweise in Gestalt eines CCD-Arrays.

Die DE 10 2008 025 669 A1 offenbart einen optischen Sensor, welcher eine Geste detektiert, woraufhin ein Schließelement eines Fahrzeugs automatisch bewegt wird.

Die WO 2008/116699 A2 betrifft einen optischen Sensorchip und bezieht sich auf eine optische Einklemmschutzvorrichtung für die Überwachung einer Fensterscheibe, Schiebetür oder einer Heckklappe in einem Kraftfahrzeug.

Die WO 2012/084222 A1 offenbart einen optischen Sensor zur Betätigung und Überwachung eines Schließelements.

Die EP 2 314 427 A2 offenbart ein Verfahren zur Steuerung von Geräten mittels Bewegungsdetektion, wobei eine Kameraanordnung in Gestalt einer Time-of-Flight Kamera verwendet wird.

Da die Gestensteuerung in verschiedenen technischen Bereichen immer größere Akzeptanz erfährt, wurden auch Versuche unternommen, solche rein optischen Systeme zur Erkennung des Bedienwunsches bei Kraftfahrzeugen zu verwenden. Bei diesen Systemen herrscht jedoch weiterhin die Erfassung von Bedienungen über kapazitive Systeme vor.

Die DE 10 2011 089 195 A1 offenbart ein System zur berührungslosen Erfassung von Gegenständen und Bediengesten mit einer optisch gestützten Einrichtung ähnlicher Art, wie sie auch für die Erfindung einsetzbar ist. Allerdings sind derartige Systeme anspruchsvoll bezüglich der Energieaufnahme, eine ständige Überwachung der Zugangskontrolle im Fahrzeugumfeld ist wegen des Energiebedarfs problematisch.

Aufgabe der Erfindung ist es, ein optisch gestütztes und energieoptimiertes System zu Bedienkontrolle bei Zugangssystemen für Fahrzeuge bereitzustellen.

Diese Aufgabe wird durch eine Einrichtung mit den Merkmalen des Anspruchs 1 gelöst.

Das erfindungsgemäße System bedient sich einer optischen Erfassung, jedoch keiner reinen Bilderfassung. Es wird ein Pixelarray mit einer zeitlichen Ansteuerung verwendet, welches Abstandserfassungen erlaubt und eine Objektbewegung erfassen kann, indem die Abstandsinformation in einer zeitlichen Folge analysiert werden. Es sind Erfassungseinrichtungen bekannt, welche eine pixelbezogene Ortsinformation, insbesondere eine Distanz von der Sensor- oder Erfassungseinrichtung erfassen. Diese Systeme werden beispielsweise, je nach angewandtem Auswertungsverfahren, als "Time-of-flight"-Systeme oder auch als "3D-Imager" oder "Range Imager" bezeichnet. Die Anwendungsgebiete solcher Systeme liegen im Bereich der industriellen Automatisierungstechnik, in der Sicherheitstechnik und im Automobilbereich. In einem Auto werden 3D-Sensoren in Spurhaltesystemen, zum Fußgängerschutz oder als Einparkhilfe eingesetzt. Sowohl Konzepte der Triangulation als auch der Interferometrie und auch der Lichtlaufzeitmessung (Time-of-flight (ToF)) können mit optischen Sensoren umgesetzt werden.

Das erfindungsgemäße System weist ein Array von lichtsensitiven Pixeln auf, außerdem eine Lichtquelle. Die Lichtquelle ist im Bereich des Arrays von sensitiven Pixeln angeordnet, beispielsweise in geringem Abstand von dem Array. Eine Steuerschaltung steuert sowohl den Betrieb der Lichtquelle als auch den Betrieb des Pixelarrays.

In diesem Zusammenhang wird auf diesbezügliche Ausarbeitungen verwiesen, welche die technischen Konzepte und deren Realisierung detailliert beschreiben, insbesondere die Dissertation "Photodetektoren und Auslesekonzepte für 3D-Time-of-Flight-Bildsensoren in 0,35 µm-Standard-CMOS-Technologie", Andreas Spickermann, Fakultät für Ingenieurwissenschaften der, Universität Duisburg-Essen, 2010.

Außerdem wird auf die Publikation "Optimized Distance Measurement with 3D-CMOS Image Sensor and Real-Time Processing of the 3D Data for Applications in Automotive and Safety Engineering", Bernhard König, Fakultät für Ingenieurwissenschaften der Universität Duisburg-Essen, 2008 verwiesen.

Die vorgenannten Arbeiten beschreiben das Konzept und die Realisierung von einsetzbaren optischen Sensorsystemen, so dass im Rahmen dieser Anmeldung auf deren Offenbarung verwiesen wird und nur zum Verständnis der Anmeldung relevante Aspekte erläutert werden.

Die Erfindung betrifft eine Sensoranordnung welche das Time-of-Flight-(ToF)Verfahren nutzt, so dass dieses hier kurz erläutert wird.

Beim ToF-Verfahren wird ein Raumbereich mit einer Lichtquelle beleuchtet und die Laufzeit des von einem Objekt im Raumbereich zurück reflektierten Lichtes mit einem Flächensensor aufgenommen. Dazu sollten Lichtquelle und Sensor möglichst nah zueinander angeordnet sein. Aus dem linearen Zusammenhang von Lichtlaufzeit und Lichtgeschwindigkeit lässt sich die Distanz zwischen Sensor und Messobjekt bestimmen. Zur Messung der zeitlichen Verzögerung muss eine Synchronisation zwischen Lichtquelle und Sensor gegeben sein. Durch die Nutzung gepulster Lichtquellen können die Verfahren optimiert werden, denn kurze Lichtpulse (im ns-Bereich) ermöglichen eine effiziente Hintergrundlichtunterdrückung. Außerdem werden durch die Verwendung des gepulsten Lichts mögliche Mehrdeutigkeiten bei der Bestimmung der Distanz vermieden, so lange der Abstand genügend groß ist.

Einerseits wird bei diesem Konzept die Lichtquelle gepulst betrieben. Außerdem wird die Detektionseinheit, also das Pixelarray gepulst sensitiv geschaltet, also das Integrationsfenster der einzelnen Pixel wird zeitlich mit der Lichtquelle synchronisiert und in der Integrationsdauer begrenzt. Durch den Vergleich von Ergebnissen mit unterschiedlichen Integrationsdauern können insbesondere Effekte von Hintergrundlicht herausgerechnet werden.

Wesentlich ist, dass diese Erfassungsmethode keine bildbasierte Erfassungsmethode ist. Es wir bei jedem Pixel eine Abstandsinformation ermittelt, was durch die zeitliche Lichtdetektion erfolgt. Bei Verwendung eines Pixelarrays liegt schließlich eine Matrix von Abstandswerten vor, welche bei zyklischer Erfassung eine Interpretation und Verfolgung von Objektbewegungen zulässt.

Erfindungsgemäß wird jedoch zwischen verschiedenen Betriebsmodi der Erfassungseinrichtung unterschieden. Dazu sind Gruppen von Pixeln gebildet, die zur Erfassung von der Steuereinrichtung getrennt angesteuert werden können.

Bei Ansteuerung einer Untergruppe der Pixel bei gleichzeitiger Deaktivierung der übrigen Pixel stellt sich eine Energieersparnis ein.

Erfindungsgemäß werden also die einzelnen Pixel des Arrays zu unterschiedlichen Gruppen zusammengefasst, wobei eine der Gruppen beispielsweise sämtliche Pixel umfassen kann und eine zweite Gruppe nur einen Teil der Pixel umfasst. Wann dabei in welchen Modus zu schalten ist, ergibt sich aus der Auswertung der Pixelsignale. Im Rahmen dieser Anmeldung wird dieses Konzept als Ansteuerungsschema bezeichnet. Ein Ansteuerungsschema kann also eine Pixelauswahl und die zugehörigen Ansteuerungsparameter (z.B. Zeitparameter) umfassen.

Wird also nur eine Teilgruppe der Pixel betrieben, so wird diese dennoch in der vorgesehenen Weise zur Ermittlung der Abstandswerte von jedem der einzelnen Pixel angesteuert und ausgewertet. Dabei kann die Ansteuerung der Teilmenge von Pixeln in anderer Weise, insbesondere mit anderen zeitlichen Parametern erfolgen als die Ansteuerung für den Fall, dass sämtliche Pixel betrieben werden. Wird beispielsweise bei einer rechteckigen Pixelanordnung auf einem Pixelarray nur die Gruppe der am äußeren Rand befindlichen Pixel angesteuert, so reicht dies aus, um eine Annäherung eines Bedieners in den Erfassungsbereich der Sensoranordnung zu erfassen. Zwar ist diese Erfassung nicht gleichwertig in ihrer Präzision wie die Erfassung mit der gesamten Pixelanzahl, dies ist jedoch auch nicht erforderlich, da bei Verbesserungsbedarf der Präzision sämtliche Pixel aktiviert werden.

Wird also beispielsweise der erwähnte Pixelrahmen im Ruhemodus aktiv gehalten, so kann eine Erfassung über diesen Pixelrahmen in größeren Zeitabständen als im Aktivmodus erfolgen und es erfolgt eine gröbere Auswertung, ob eine mögliche Benutzerannäherung vorliegt. Ist dies der Fall, wird die Sensoranordnung in einen weiteren Betriebsmodus, den Aktivmodus überführt, bei dem eine andere Pixelgruppe, beispielsweise sämtliche Pixel aktiviert sind und ausgewertet werden. Auch die Frequenz, mit der die Auswertung erfolgt, ist in den unterschiedlichen Betriebsmodi unterschiedlich sein. Gemäß der Erfindung wird die Abfragefrequenz beim Betriebsmodus mit der ersten Pixelgruppe, dem Ruhemodus, reduziert gegenüber der Abfragefrequenz mit der die erweiterte Pixelgruppe zur Gestenerkennung, im Aktivmodus, betrieben wird. Es reicht erfindungsgemäß aus, wenn die Erfassung der Annäherung eines Benutzers mit geringerer Frequenz überprüft wird als die feiner aufgelöste Erfassung von Benutzergesten.

Die Anordnung der ausgewählten Pixelgruppen auf dem Sensor-Array kann auch in zeitlich variabler Weise erfolgen. Beispielsweise kann wechselweise ein Viertel der Sensorfläche zyklisch abgefragt werden, so dass sich zwar die Pixelanzahl bei jeder Abfrage im stromreduzierten Modus im Wesentlichen gleicht, jedoch nicht immer dieselben Pixel für diese Stromsparabfrage verwendet werden. Im vorgenannten Beispiel bei der Verwendung eines Viertels der Pixel können beispielsweise zyklisch die Viertel-Sektoren variiert werden, so dass jeder Pixel nur bei jeder vierten Abfrage aktiviert wird.

Wesentlich ist, dass durch die Ansteuerung einer Pixeluntergruppe des Arrays der Sensor selbst in einem weiteren Betriebsmodus als stromreduzierter Aktivierungssensor betrieben wird. Dieses erfindungsgemäße Vorgehen hat gegenüber einer Verwendung eines separaten Aktivierungssensors bauliche Vorteile, da weniger Komponenten erforderlich sind.

Wie vorstehend bereits erwähnt, können die Pixelgruppen Schnittmengen aufweisen und eine Pixelgruppe kann eine andere Pixelgruppe vollständig umfassen.

Zu jedem der Ansteuerungsschemata gehört grundsätzlich jeweils auch ein Auswertungsschema. Das Auswertungsschema kann hinsichtlich des Ansteuerungsschemas angepasst sein.

Wird eine derartige Sensoranordnung an einem Fahrzeug zur Überwachung des Außenbereichs und zur Eintrittskontrolle zu einem Fahrzeug eingesetzt, so ist die Aktivierung einer Untermenge der Pixel ausreichend, um zumindest die Annäherung eines Benutzers festzustellen. Bewegt sich der Benutzer in diesem Bereich so wird dies durch charakteristische Signaländerungen der Distanzwerte bei einer Mehrzahl der Pixel erfasst. Zwar ist mit der reduzierten Auflösung des Pixelarrays im Ruhemodus keine präzise Gestenerkennung möglich, dies ist jedoch auch nicht erforderlich. Die grobe Erkennung einer Benutzerannäherung führt nämlich zu einer Änderung der Ansteuerung durch die Steuereinrichtung, so dass nun im Aktivmodus eine andere Pixelgruppe, möglicherweise die erste Pixelgruppe umfassende Pixelgruppe angesteuert wird. Mit der erhöhten Auflösung können dann Bewegungsgesten erfasst werden.

In einer bevorzugten Ausgestaltung der Erfindung werden von einem Pixelarray die in den Außenbereichen, z.B. dem Rand des Pixelarrays liegenden Pixel als erste Gruppe aktiviert. Durch diese Maßnahme wird die räumliche Erstreckung und Unterscheidbarkeit der Signale bei gleichzeitig reduzierter Pixelzahl optimal ausgenutzt.

Erfindungsgemäß kann auch die im Stromsparmodus erfolgte Erfassung, auch wenn dies eine erste grobe Erfassung ist, für die nachfolgende und feiner aufgelöste Erfassung der Bewegungsgesten zusätzlich herangezogen werden.

Die Erfindung wird nun anhand eines Ausführungsbeispiels näher erläutert.
Figur 1 zeigt in schematischer Weise die Einsatzsituation einer patentgemäßen Erfassungsvorrichtung an einem Fahrzeug;
Figur 2 zeigt die wirkenden Komponenten einer Erfassungsvorrichtung in schematischer Darstellung;
Figuren 3A bis 3C zeigen in schematischer Weise ein Sensorfeld in verschiedenen Betriebsmodi.

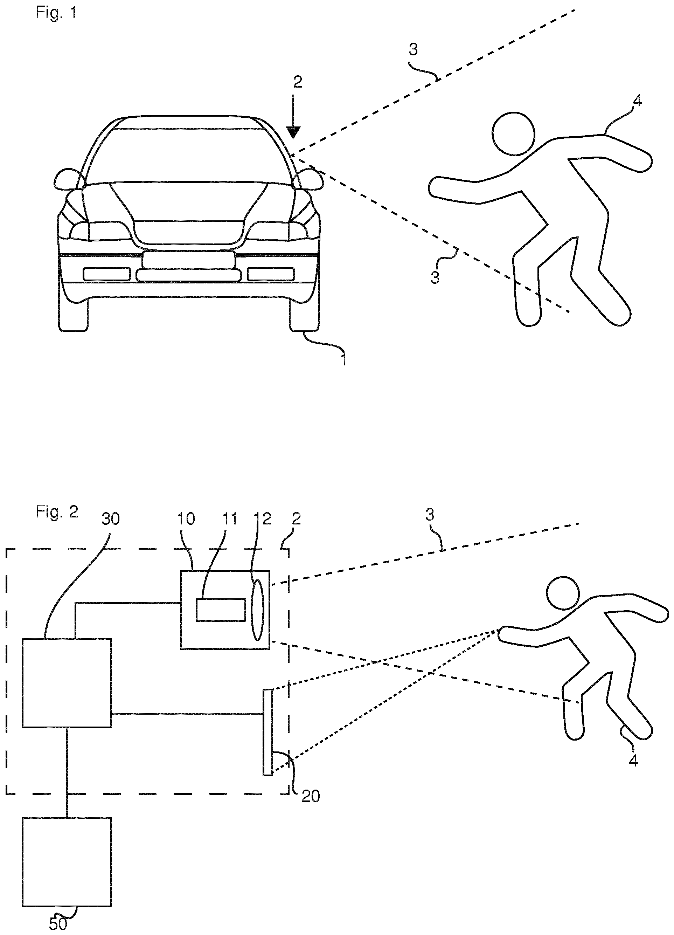

Wie in Figur 1 dargestellt, ist ein Fahrzeug 1 mit einer erfindungsgemäßen Sensoreinrichtung 2 ausgestattet. Die Sensoreinrichtung 2 erfasst Vorgänge und Bewegungen in einem Erfassungsbereich 3, hier durch Linien angedeutet. Ein Benutzer 4, welcher sich dem Fahrzeug nähert, hat die Möglichkeit, in den Erfassungsbereich 3 Bewegungsgesten auszuführen, um Fahrzeugfunktionen abzurufen. In der hier gezeigten Ausführungsform ist die Erfassungsvorrichtung 2 seitlich am Fahrzeug, beispielsweise in der B-Säule untergebracht. Eine derartige Erfassungsvorrichtung kann jedoch auch an beliebiger anderer Stelle des Fahrzeuges, insbesondere im Heckbereich oder im Frontbereich angeordnet sein.

Figur 2 zeigt die Komponenten der Erfassungsvorrichtung 2 in schematischer Darstellung. In dieser Darstellung ist das Fahrzeug 1 nicht gezeigt, um die Darstellung nicht unklar zu gestalten.

Die Einrichtung 2 weist eine Lichtquelle 10 auf, welche in diesem Beispiel aus einer Laserdiode 11 und einer aufweitenden Optik 12 gebildet ist. Die Optik 12 erweitert den Strahlquerschnitt, so dass ein breiter Erfassungsbereich 3 gebildet ist, in welchen ein Benutzer 4 eintreten und in welchen er Bewegungsgesten ausführen kann. Es kann sich hierbei z.B. um eine einfache Kunststoffoptik handeln, z.B. eine Fresnel-Linse.

Ein Detektionsarray 20 ist neben der Lichtquelle angeordnet, ausgerichtet mit dem sensitiven Bereich in Richtung des Erfassungsbereiches 3. Das Array 20 enthält Spalten und Zeilen von sensitiven Pixeln, und ist in diesem Beispiel als CCD-Array ausgebildet. Sowohl die Lichtquelle 10 als auch das Array 20 sind mit einer Steuereinrichtung 30 gekoppelt, welche ein getakteten und zeitgesteuerten Betrieb der Lichtquelle und Erfassungseinrichtung ermöglichen. Wird die Lichtquelle zur Aussendung eines Lichtpulses angesteuert und die Pixelarray-Anordnung zur Erfassung angesteuert, so integrieren die einzelnen Pixel die auftreffende Lichtenergie. Die schließlich nach Integration vorhandenen Ladungen jedes Pixels werden in der Steuereinrichtung ausgewertet, so dass für jeden Pixel ein für den Integrationszeitraum charakteristischer Erfassungswert generiert wird.

Über diese zeitabgestimmte und synchronisierte Ansteuerung sowohl der Lichtquelle 10 als auch der Erfassungseinrichtung 20 ist für jedes Pixel der Erfassungseinrichtung 20 eine Erfassung der Lichtlaufzeit und damit eine Abstandsdetektion möglich. Zu genauen Funktionen wird auf die Offenbarung der oben genannten Veröffentlichungen verwiesen, insbesondere auf die bekannten Time-of-Flight-Einrichtungen.

In der Figur 2 ist beispielhaft dargestellt, dass von der Hand des Benutzers 4 ein Teil des von der Lichtquelle 10 abgestrahlten Lichtes gestreut oder reflektiert wird und auf die Detektionseinrichtung 20 fällt. In der Praxis wird die Lichtinformation selbstverständlich nicht allein von einem Punkt ausgehen, welche das Licht streut oder reflektiert, stattdessen wird eine Integration über das gesamte empfangene Licht von allen sichtbaren Punkten erfolgen. Auch die Umgebung wird zu der Detektionsleistung beitragen. Es sind jedoch Algorithmen und Betriebsweisen der Sensoranordnung bekannt, bei denen das Umgebungslicht weitgehend herausgerechnet werden kann. Insbesondere können mehrere Aufnahmen kurz nacheinander und mit veränderten zeitlichen Parametern erfolgen, um Hintergrundlicht herauszurechnen. Eine solche Erfassung kann insbesondere mit unterschiedlichen Integrationszeiten erfolgen, um Hintergrundeinflüsse zu beseitigen. Wird nämlich beispielsweise der Lichtpuls mit identischer Dauer ausgesendet, jedoch die Integration in ihrer Dauer variiert, so haben die Hintergrundeinflüsse einen linearen Zusammenhang zur Integrationszeit, während die Einflüsse durch den Lichtpuls nur für die Dauer des Lichtpulses bestehen.

Die Steuer- und Auswerteeinrichtung 30 erfasst die Informationen und rechnet diese in einen Array von Abstandsinformationen um. Dadurch kann eine 3D-Karte der Umgebung erstellt werden. Durch eine zeitliche Abfolge von Handsteuerungen kann eine 3D-Information von Raumveränderungen und Objektbewegungen im Erfassungsbereich 3 erfasst werden. Beispielsweise kann das Schwenken einer Hand des Benutzers 4 detektiert werden. Die Steuereinrichtung 30, und über sie die gesamte Erfassungseinrichtung 2 ist mit einer zentralen Steuereinrichtung 50 des Kraftfahrzeuges gekoppelt. Die Erkennung von Bewegungsgesten kann einerseits anhand einer Bibliothek in der Steuer- und Auswerteeinrichtung 30 erfolgen oder eine Zeitfolge von 3D-Raumdaten wird der zentralen Steuereinrichtung 50 zugeleitet, um dort ausgewertet zu werden. Die zentrale Steuereinrichtung 50 initiiert schließlich in Abhängigkeit von den erfassten Daten die Funktionsauslösung des Kraftfahrzeuges, beispielsweise das Absenken einer Seitenscheibe oder die Öffnung einer Tür.

Wie in Figur 1 gezeigt, ist es erforderlich, dass ein Benutzer 4 sich in einen Erfassungsbereich 3 der Detektionseinrichtung 2 begibt, um eine Betätigungsauslösung durchführen zu können. Ein Fahrzeug steht jedoch den überwiegenden Teil seiner Lebensdauer still, in der Erwartung einer Inbetriebnahme. In diesen Zeiten ist es äußerst wichtig, die Leistung bzw. den Strombedarf von sämtlichen Einrichtungen an Fahrzeugen gering zu halten.

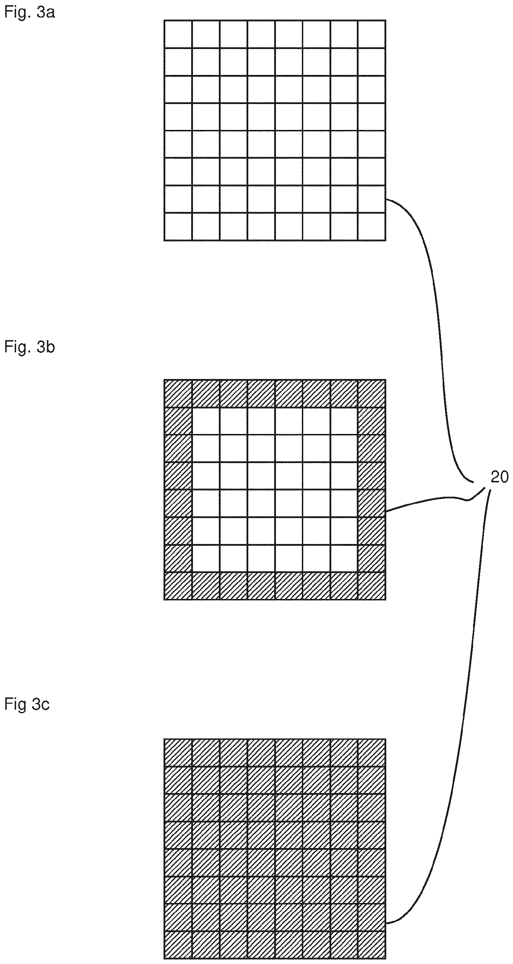

Die Figuren 3A, 3B, 3C zeigen eine schematische Darstellung eines CCD-Arrays, welches zur erfindungsgemäßen Erfassung mit dem Time-of-Flight-Verfahren betreibbar ist. In diesem Beispiel besteht das Array aus einem quadratischen Chip mit 8 Spalten und 8 Zeilen. Dies ist lediglich ein anschaulicher Wert - in der Praxis ist eine deutlich höhere Auflösung möglich. Andererseits braucht ein derartiger Chip nicht ansatzweise die Auflösungen eines optischen Chips für detailreiche Aufnahmen zu haben, um die erfindungsgemäße Gestenerfassung zu ermöglichen. Bereits die Anzahl von 1024 Pixeln erlaubt eine differenzierte Auswertung von Benutzergesten, da für jedes dieser Pixel wiederholte Distanzmessungen durchgeführt werden und ein Bewegungsprofil in zeitlicher Folge erfasst wird. Auch mit einer geringeren Pixelzahl ist immer noch eine verlässliche Gestenerfassung möglich.

In Figur 3A ist ein Zustand des Sensorarrays 20 gezeigt, bei dem sämtliche Pixel gänzlich abgeschaltet sind, also inaktiv sind. Eine Bewegungserkennung oder Gestenerkennung ist mit einem derartigen Pixelfeld nicht möglich. Dieser Zustand wird eingenommen, wenn das Fahrzeug beispielsweise gänzlich stillgelegt wird oder aber beispielsweise, wenn für mehrere Tage kein Zugriff auf das Fahrzeug stattgefunden hat.

Figur 3B zeigt den Zustand des Fahrzeuges in den erfindungsgemäßen ersten Betriebsmodus, dem Ruhemodus. Die Pixelanordnung ist derart geschaltet, dass eine erste Gruppe von aktiven Pixeln den äußeren Rahmen der Pixelanordnung belegt. Ein inneres Feld der Pixel bleibt in diesem Betriebsmodus stromlos. Die schraffierten Pixel des äußeren Rahmens werden mit einer ersten Taktfrequenz abgefragt, z.B. 10 Hz. Da mit reduzierter Pixelzahl auch eine Reduzierung der Auflösung und der Detektionsgenauigkeit einhergeht, sind die gelieferten Daten weniger detailliert. In diesem Betriebsmodus werden also statt der in diesem Beispiel gezeigten 64 Pixel nur 28 Pixel betrieben, und diese ggf. mit geringerer Abfragefrequenz. Erfindungsgemäß ist bei diesem Ausführungsbeispiel ein eigenes Auswerteschema für diesen Betriebsmodus vorgesehen. Die Auswertung kann allgemein über Anpassung mit Musterschemata und/oder auch z.B. neuronale Netzte erfolgen. Es sind also z.B. in der Steuereinrichtung 30 Signalmuster hinterlegt, die eine Erfassung und Auswertung mit dieser reduzierten Pixelgruppe ermöglichen. Beispielsweise kann diese hinterlegte Musterbibliothek für zeitliche Signalfolgen auf die Erfassung des Schemas eines menschlichen Körpers ausgerichtet sein. Zwar ist keine präzise Gestenerfassung in diesem Betriebsmodus möglich, es ist jedoch bei diesem Ausführungsbeispiel möglich, die Annäherung eines Menschen von der Annäherung sonstiger Körper, beispielsweise von Tieren oder sonstige Objekten zu unterscheiden.

Alternativ können auch deutlich einfachere Auswertungsschemata zum Einsatz kommen. Beispielsweise kann die zeitliche Signalveränderung, welche auf die Annäherung eines beliebigen Objektes hinweist, zur Umschaltung auf den Aktivmodus verwendet werden. Eine einfache Möglichkeit ist es auch, den Mittelwert der Signale der aktiven Pixel zu verwenden und eine zeitliche Veränderung der Werte um einen Schwellwert in vorgegebener Zeit als Trigger zu verwenden.

In dem Fall, dass die Erfassung mit reduzierter Pixelzahl gemäß Aktivierungsschema der Pixel in Figur 3B zeigt, dass sich ein Mensch in dem Erfassungsbereich begibt, wird die zweite Pixelgruppe, also das Innere des Sensorfeldes hinzugeschaltet, wie in Figur 3C gezeigt. Nun steht die Erfassung mit voller Auflösung zur Gestenerkennung zur Verfügung. Dieser leistungsintensivere Betrieb (Aktivbetrieb) wird demgemäß aktiviert, wenn eine Vorauswertung die Aktivierungsbedingungen erfüllt hat.

Wird innerhalb eines gewissen Zeitfensters keine Gestensteuerung erfasst und entfernt sich das Objekt wieder aus dem Erfassungsbereich, kehrt die Einrichtung zu dem ersten Erfassungsmodus zurück, in welchem die Stromaufnahme reduziert ist.

Wesentlich ist, dass die Aktivierungsabfrage selbst über dasselbe Sensorfeld erfolgt, wie die tatsächliche spätere sensitive und detailreiche Auswertung.

Der Wechsel zwischen den Betriebsmodi wird anhand der detektierten Informationen durch die Steuereinrichtung 30 vorgenommen. Allerdings kann auch die Steuereinrichtung 30 mit einem Signal von der zentralen Fahrzeugeinrichtung 50 versorgt werden, welches die Änderung sonstiger Fahrzeugparameter anzeigt. Beispielsweise kann bei Betätigung eines Fernbedienungsgebers durch einen Benutzer die Aktivierung sämtlicher Sensoren für einen bestimmten Zeitraum vorgenommen werden. Außerdem kann für den Fall, dass beispielsweise ein Abschließen des Fahrzeuges erfolgt, gezielt auf den Stromsparmodus gewechselt werden.

Die in den Figuren 3A bis 3C gezeigten Aktivierungsschemata für Pixelerfassungen sind im Übrigen beispielhafter Natur. Statt des Pixelrahmens können auch zeilenweise oder sektorenweise Aktivierungen erfolgen. Es ist außerdem möglich, wechselnde Pixelfelder zu aktivieren, um eine gleichmäßige Auslastung der Erfassungseinheiten zu gewährleisten. Diese Sektoren oder Pixelgruppen können zyklisch aktiviert werden.

Wesentlich für die Erfindung ist es, dass die Pixelfelder einer 3D-Erfassungseinrichtung für den Zugang zu einem Fahrzeug in Gruppen ansteuerbar sind, die einen stromreduzierten Modus für die Erfassungs- und Aktivierungserkennung ermöglichen.

## Patentansprüche

1. Sensoreinrichtung (2) für ein Kraftfahrzeug (1), mit einer Lichtquelle (10) und einer Erfassungseinrichtung (20), wobei die Erfassungseinrichtung mit einem Array von optischen Pixeln gebildet ist,
wobei die Lichtquelle (10) und die Erfassungseinrichtung (20) mit einer Steuer- und Auswerteeinrichtung (30) gekoppelt sind, welche die Lichtquelle (10) zur Abgabe von Lichtpulsen ansteuert und die Erfassungseinrichtung zur Erfassung ansteuert sowie die erfassten Signale der Erfassungseinrichtung (20) auswertet,
wobei die Steuer- und Auswerteeinrichtung (30), die Erfassungseinrichtung (20) und die Lichtquelle (10) als Time-of-Flight-Kamera (ToF-Kamera) zusammenwirken, so dass räumliche Entfernungsdaten erfasst werden,
dass die Steuer- und Auswerteeinrichtung (30) mehrere Ansteuerungsschemata für verschiedene Gruppen von Pixeln der Erfassungseinrichtung (20) aufweist,
wobei ein erstes Ansteuerungsschema (Ruhemodus) eine Teilmenge von Pixeln als erste Pixelgruppe ansteuert und auswertet,
wobei ein zweites Ansteuerungsschema (Aktivschema) eine größere Menge von Pixeln als zweite Pixelgruppe ansteuert und auswertet,
**dadurch gekennzeichnet, dass**
die Steuer- und Auswerteeinrichtung in Abhängigkeit von dem Ergebnis der Auswertung gemäß erstem Ansteuerungsschema zu der Ansteuerung gemäß zweitem Ansteuerungsschema wechselt,
wobei gemäß dem ersten Ansteuerungsschema eine Ansteuerung wiederholt, mit einer ersten Erfassungsfrequenz f1 erfolgt und wobei gemäß dem zweiten Ansteuerungsschema die Ansteuerung wiederholt, mit einer zweiten, höheren Erfassungsfrequenz f2 erfolgt.

2. Sensoreinrichtung nach Anspruch 1, wobei die zweite Pixelgruppe die erste Pixelgruppe umfasst.

3. Sensoreinrichtung nach Anspruch 1 oder 2, wobei das Array von optischen Pixeln sich in einer Ebene erstreckt und wobei die erste Pixelgruppe aus äußeren Pixeln des Arrays gebildet ist.

4. Sensoreinrichtung nach Anspruch 1 oder 2, wobei das Array von optischen Pixeln sich in einer Ebene erstreckt und wobei mehrere erste Pixelgruppen ansteuerbar sind, welche alternativ durch die Steuer- und Auswerteeinrichtung ansteuerbar sind, so dass gemäß dem ersten Ansteuerungsschema wechselnde Teilmengen der Pixel der Erfassungseinrichtung aktiviert werden.

5. Sensoreinrichtung nach einem der vorangehenden Ansprüche, wobei die Steuer- und Auswerteeinrichtung bei Ansteuerung gemäß dem ersten Ansteuerungsschema ein zugehöriges erstes Auswertungsschema zur Auswertung der Daten der Erfassungseinrichtung einsetzt und wobei die Steuer- und Auswerteeinrichtung bei Ansteuerung gemäß dem zweiten Ansteuerungsschema ein zugehöriges zweites Auswertungsschema zur Auswertung der Daten der Erfassungseinrichtung einsetzt.

## Claims

1. A sensor device (2) for a vehicle (1), having a light source (10) and a detection device (20), said detection device being formed using an array of optical pixels,
wherein the light source (10) and the detection device (20) are coupled to a control and evaluation device (30), which activates the light source (10) to emit light pulses and activates the detection device to perform the detection, and evaluates the detected signals from the detection device (20),
wherein the control and evaluation device (30), the detection device (20) and the light source (10) together act as a time-of-flight camera (ToF camera), allowing spatial range data to be detected,
that the control and evaluation device (30) has a plurality of activation schemes for different groups of pixels of the detection device (20),
that the first activation scheme (idle mode) activates and evaluates a subset of pixels as a first pixel group,
wherein a second activation scheme (active scheme) activates and evaluates a larger set of pixels as a second pixel group,
**characterized in that**
depending on the result of the evaluation according to the first activation scheme, the control and evaluation device switches to an activation according to the second activation scheme,
wherein according to the first activation scheme an activation is repeated with a first detection frequency f1 and wherein according to the second activation scheme the activation is repeated with a second, higher detection frequency f2.

2. The sensor device according to claim 1, wherein the second pixel group comprises the first pixel group.

3. The sensor device according to claim 1 or 2, wherein the array of optical pixels extends in a plane and wherein the first pixel group is formed from outer pixels of the array.

4. The sensor device according to claim 1 or 2, wherein the array of optical pixels extends in a plane and wherein a plurality of first pixel groups can be activated which can be alternately activated by the control and evaluation device, so that according to the first activation scheme changing subsets of the pixels of the detection device are activated.

5. The sensor device according to any one of the preceding claims, wherein during activation according to the first activation scheme the control and evaluation device uses an associated first evaluation scheme to evaluate the data of the detection device and wherein during activation according to the second activation scheme, the control and evaluation device uses an associated second evaluation scheme to evaluate the data of the detection device.

## Revendications

1. Dispositif détecteur (2) pour un véhicule automobile (1), avec une source lumineuse (10) et un dispositif de détection (20), dans lequel le dispositif de détection est formé par un réseau de pixels optiques,
dans lequel la source lumineuse (10) et le dispositif de détection (20) sont couplés à un dispositif de commande et d'évaluation (30), lequel commande la source lumineuse (10) pour l'émission d'impulsions lumineuses et commande le dispositif de détection pour la détection ainsi qu'évalue les signaux détectés du dispositif de détection (20),
dans lequel le dispositif de commande et d'évaluation (30), le dispositif de détection (20) et la source lumineuse (10) coopèrent en tant que caméra temps de vol (ToF camera) de sorte que des données de distance spatiale sont détectées,
le dispositif de commande et d'évaluation (30) présentant plusieurs schémas de commande pour différents groupes de pixels du dispositif de détection (20),
dans lequel un premier schéma de commande (mode veille) commande et évalue une quantité partielle de pixels en tant que premier groupe de pixels,
dans lequel un deuxième schéma de commande (schéma actif) commande et évalue une plus grande quantité de pixels en tant que deuxième groupe de pixels,
**caractérisé en ce que**,
en fonction du résultat de l'évaluation selon le premier schéma de commande, le dispositif de commande et d'évaluation passe à la commande selon le deuxième schéma de commande,
dans lequel, selon le premier schéma de commande, une commande s'effectue de manière répétée avec une première fréquence de détection f1 et dans lequel, selon le deuxième schéma de commande, la commande s'effectue de manière répétée avec une deuxième fréquence de détection f2 plus élevée.

2. Dispositif détecteur selon la revendication 1, dans lequel le deuxième groupe de pixels comprend le premier groupe de pixels.

3. Dispositif détecteur selon la revendication 1 ou 2, dans lequel le réseau de pixels optiques s'étend dans un plan et dans lequel le premier groupe de pixels est formé par des pixels extérieurs du réseau.

4. Dispositif détecteur selon la revendication 1 ou 2, dans lequel le réseau de pixels optiques s'étend dans un plan et dans lequel plusieurs premiers groupes de pixels peuvent être commandés, lesquels peuvent être commandés en variante par le dispositif de commande et d'évaluation de sorte que, selon le premier schéma de commande, des quantités partielles variables des pixels du dispositif de détection sont activées.

5. Dispositif détecteur selon l'une des revendications précédentes, dans lequel le dispositif de commande et d'évaluation, en cas de commande selon le premier schéma de commande, utilise un premier schéma d'évaluation correspondant pour l'évaluation des données du dispositif de détection, et dans lequel le dispositif de commande et d'évaluation, en cas de commande selon le deuxième schéma de commande, utilise un deuxième schéma d'évaluation correspondant pour l'évaluation des données du dispositif de détection.
